# EUROPEAN PATENT SPECIFICATION

(11) **EP 2 690 896 B1**
(45) Date of publication and mention of the grant of the patent: **24.07.2019**
(21) Application number: 11865624.8
(22) Date of filing: 18.10.2011
(51) Int. Cl.: H04W 4/14, H04W 4/18, H04W 12/06, H04L 12/58, H04L 29/06, H04W 4/12, H04W 4/20

(54) **SYSTEM AND METHOD FOR SHORT MESSAGE VALUE-ADDED SERVICE**
SYSTEM UND VERFAHREN FÜR KURZNACHRICHTEN-MEHRWERTDIENST
SYSTÈME ET PROCÉDÉ POUR UN SERVICE À VALEUR AJOUTÉE DE MESSAGES COURTS

(30) Priority: 13.05.2011 CN 201110124336
(43) Date of publication of application: 29.01.2014
(73) Proprietor: ZTE Corporation, Shenzhen, Guangdong 518057 (CN)
(72) Inventor: WANG, Guocai, Shenzhen Guangdong 518057 (CN); ZHANG, Haojun, Shenzhen Guangdong 518057 (CN)
(74) Representative: Garratt, Peter Douglas
(86) International application number: PCT/CN2011/080956
(87) International publication number: WO 2012/155450

(56) References cited:
- WO-A1-2010/081256
- CN-A- 101 039 352
- CN-A- 101 202 959
- US-A1- 2007 239 737
- US-A1- 2008 200 190
- US-B1- 7 133 687

## Description

### TECHNICAL FIELD

The disclosure relates to the field of mobile communications, and in particular to a system and method for processing a short message value-added service.

### BACKGROUND

Along with popularization of mobile terminals, various value-added services are used extensively.

There are mainly three value-added service models currently provided by a Service Provider (SP), namely, 1) an uplink service such as subscription, and cancelling of subscription; 2) a downlink service such as a service issued by an SP directly; and 3) an on-demand service combining uplink and downlink flows. Both a Short Messaging Service (SMS) service and a Multimedia Messaging Service (MMS) service contain such three service models. An SMS demand is taken as an example below.

At present, a flow of demanding an SMS is as follows:
When a user needs to demand a certain service, the user sends a short message to an SMS gateway, wherein the short message is an uplink short message, in which a destination number of the short message is an SP parameter (such as a serving code plus a service code) corresponding to a demanded value-added service, and a source number of the short message is a user number;
the SMS gateway forwards the received uplink short message to an SMS center;
the SMS center performs authentication on the received uplink short message, which specifically is: the SMS center perform authentication with an authenticating node, and the authenticating node generates an on-demand identifier LinkID and returns the on-demand identifier LinkID to the SMS center;
the SMS center adds an on-demand identifier LinkID obtained after a successful authentication to the uplink short message, and sends the uplink short message to an SP server;
after the SP server receives the uplink short message, the SP server determines according to the on-demand identifier LinkID that the uplink short message is an on-demand message, and then the SP server constructs a downlink short message using content demanded by a user and the on-demand identifier LinkID, and issues the downlink short message to the SMS center, wherein a destination number of the downlink short message is the source number of the uplink short message, i.e., the user number, and a source number of the downlink short message is the destination number of the uplink short message, i.e., the SP parameter corresponding to the value-added service demanded by the user;
after the SMS center receives the downlink short message, the SMS center performs authentication on the downlink short message; and
the SMS center sends a successfully authenticated downlink short message to the user via the SMS gateway.

A flow of demanding an MMS is substantially the same as the flow of demanding an SMS.

Compared with MMS, there is a much heavier SMS traffic, and therefore traffic load of an MMS center/MMS gateway is relatively much lighter than that of an SMS gateway/SMS center. Meanwhile, in an existing value-added service in a mobile network, both SMS and MMS support a value-added service, and information content provided by an SP in SMS is in a text format, which can be converted conveniently into MMS information and vice verse. Therefore, a valued-added service in the SMS can be processed by an MMS center/MMS gateway, which may thus be used to share the traffic load of the SMS gateway.

US 2007/239737 A1 discloses that a user feedback generation and management capability, operating possibly within a Value-Added Service Provider, provides key feedback (e.g., information, updates, etc.) to a Mobile Subscriber (MS) during, for example, the MS' receipt of rich content on the MS' Wireless Device (WD) The feedback may be conveyed to a MS' WD through, possibly inter alia, one or more Short Message Service messages. Such feedback may, possibly inter alia, provide details as to why certain content might not be received, suggest one or more alternative content delivery means, etc and thus serve to obviate what would otherwise be (1) a frustrating, disappointing, etc. user experience for the MS and (2) increased customer service costs for the different content and service providers.

### SUMMARY

A purpose of the disclosure is to provide a system and method for processing a short message value-added service to relieve a traffic load of an existing SMS gateway. The invention is defined by claims 1 and 4.

Preferably, the MMS gateway may be further configured to:
perform authentication on the received value-added service uplink short message, and when the value-added service uplink short message is a service-on-demand message, add an on-demand identifier obtained by the authentication to the uplink MMS message obtained by converting the value-added service uplink short message; or
perform authentication on the downlink MMS message with the source number that is in the local short message value-added service SP information, and remove an on-demand identifier in the downlink MMS message when the downlink MMS message is a service-on-demand message.

Preferably, the SMS gateway communicates with the MMS gateway using a Simple Mail Transfer Protocol (SMTP).

The disclosure further provides a method for processing a short message value-added service, which includes:
short message value-added service SP information is pre-configured in an MMS gateway;
an SMS gateway forwards a value-added service uplink short message among received uplink short messages to the MMS gateway;
the MMS gateway converts the value-added service uplink short message into an uplink MMS message, and sends the uplink MMS message to an SP server;
the SP server receives the uplink MMS message, and returns a downlink MMS message corresponding to the received uplink MMS message to the MMS gateway;
the MMS gateway receives the downlink MMS message from the SP server and parses the received downlink MMS message to obtain a source number of the downlink MMS message and determines whether the source number is in local short message value-added service SP information, when the source number of the downlink MMS message is in the local short message value-added service SP information, the MMS gateway converts the downlink MMS message into a downlink short message, and sends the downlink short message to the SMS gateway; and
the SMS gateway sends the downlink short message to a user;
wherein the step of forwarding, by an SMS gateway, a value-added service uplink short message among received uplink short messages to the MMS gateway may includes:
   parsing the uplink short message, and obtaining a destination number;
   determining whether the destination number is an SP parameter; when the destination number is an SP parameter, the uplink short message is determined to be a value-added service uplink short message, and sending the value-added service uplink short message to the MMS gateway; when the destination number is not an SP parameter, sending the uplink short message to an SMS center.

Preferably, before the MMS gateway converts the value-added service uplink short message into an uplink MMS message, the MMS gateway may perform authentication on the value-added service uplink short message.

Preferably, before the MMS gateway converts the downlink MMS message into a downlink short message, the MMS gateway may perform authentication on the downlink MMS message.

Preferably, when the value-added service uplink short message is a service-on-demand message, before the MMS gateway sends the uplink MMS message to the SP server, the MMS gateway may add an on-demand identifier obtained by authentication to the uplink MMS message.

Preferably, when the downlink MMS message is a service-on-demand message, before the MMS gateway converts the downlink MMS message into a downlink short message, the MMS gateway may remove an on-demand identifier in the downlink MMS message.

The disclosure uses an MMS gateway to process a short message value-added service, and relieves traffic loads of an SMS gateway and an SMS center greatly. And as the MMS gateway communicates with an SP server using a Hyper Text Transfer Protocol (HTTP) based MM7 interface protocol, therefore it is more advantageous to process the short message value-added service by the MMS gateway.

### BRIEF DESCRIPTION OF THE DRAWINGS

The drawings illustrated here are intended to provide further understanding to the disclosure, and constitute a portion of the disclosure. Illustrative embodiments of the disclosure and description thereof are used to explain the disclosure instead of constituting improper restriction to the disclosure. In the drawings:
Fig. 1 is a functional block diagram of a system for processing a short message value-added service according to the disclosure; and
Fig. 2 is a flowchart of a method for processing a short message value-added service according to the disclosure.

### DETAILED DESCRIPTION

In order to make the technical problem to be solved, the technical solution and beneficial effects of the disclosure clearer and easier to understand, the disclosure is further elaborated below with reference to the drawings and embodiments. It should be understood that the specific embodiments described here are only intended to interpret the disclosure instead of limiting the disclosure.

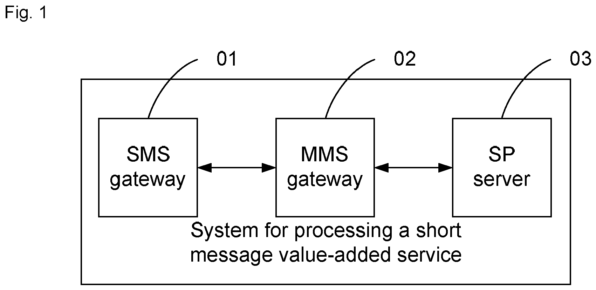

A functional block diagram of a system for processing a short message value-added service according to the disclosure is shown as Fig. 1. The system includes an SMS gateway 01, an MMS gateway 02 and an SP server 03, wherein
the SMS gateway 01 is configured to:
provide an interface for communicating with the MMS gateway 02, and communicate with the MMS gateway 02 using an SMTP; parse a received uplink short message, and determine whether a destination number of the uplink short message is an SP parameter so as to determine whether the uplink short message is a value-added service uplink short message; and
forward a value-added service uplink short message to the MMS gateway 02, or send a user a downlink short message from the MMS gateway 02;
the MMS gateway 02 is configured with short message value-added service SP information, and is configured to:
provide an interface for communicating with the SMS gateway 01, and communicate with the SMS gateway 01 using the SMTP; perform authentication on the value-added service uplink short message from the SMS gateway, convert the successfully authenticated value-added service uplink short message into an uplink MMS message, and send the uplink MMS message to the SP server 03; or
parse a downlink MMS message from the SP server and determine whether a source number of the downlink MMS message is in local short message value-added service SP information, when the source number of the downlink MMS message is in the local short message value-added service SP information, perform authentication on the downlink MMS message, convert the successfully authenticated downlink MMS message into the downlink short message, and send the downlink short message to the SMS gateway 01; and
the SP server 03 is configured to return a corresponding MMS message to the MMS gateway 02 according to the received MMS message.

In the disclosure, the SP server does not need to provide an interface for communicating with the SMS gateway 01, and all downlink message issued by the SP server are directly submitted to the MMS gateway 02 to process.

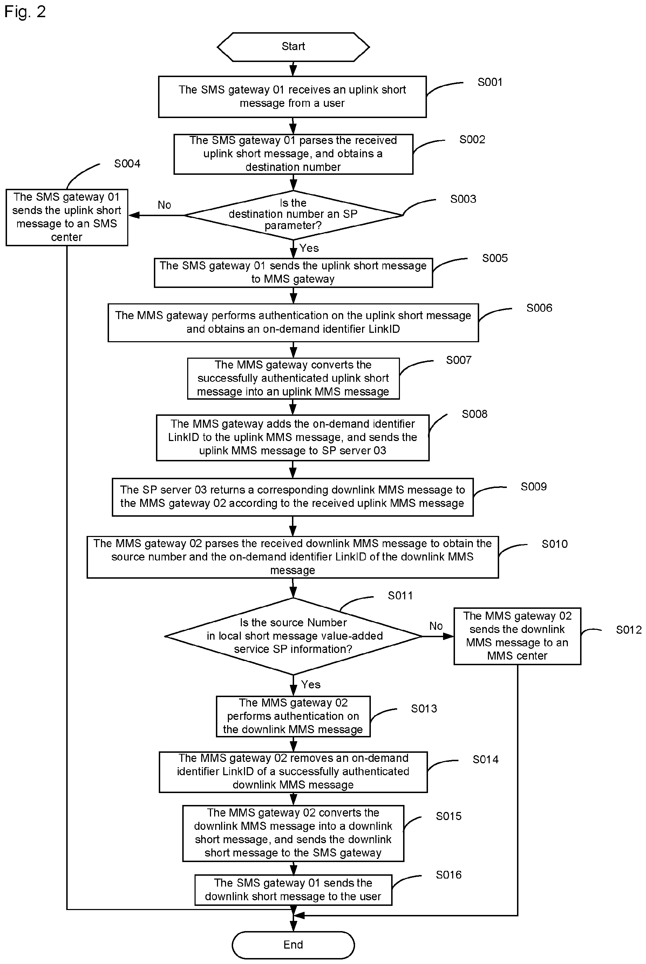

Fig. 2 is a flowchart of a method for processing a short message value-added service according to the disclosure. The embodiment is based on the system for processing a short message value-added service as shown in Fig. 1. Assuming that the MMS gateway 02 is configured with short message value-added service SP information, the flow specifically includes the following steps:
S001: The SMS gateway 01 receives an uplink short message from a user.
S002: The SMS gateway 01 parses the received uplink short message, and obtains a destination number.
S003: The SMS gateway 01 determines whether the destination number is an SP parameter, when the destination number is an SP parameter, the uplink short message is determined to be a value-added service uplink short message, step S005 is executed; otherwise, step S004 is executed.
S004: The SMS gateway 01 sends the uplink short message to an SMS center, and the flow terminates.
S005: The SMS gateway 01 sends the uplink short message to the MMS gateway.
S006: The MMS gateway performs authentication on the uplink short message and obtains an on-demand identifier LinkID.
S007: The MMS gateway converts the successfully authenticated uplink short message into an uplink MMS message.

In the step, the MMS gateway converts an information body in a text format of uplink short message into an information body in an MMS format, and the obtained source number and destination number of the uplink MMS message are the same as that of the uplink short message.

S008: The MMS gateway adds the on-demand identifier LinkID into the uplink MMS message, and sends the uplink MMS message to the SP server. In other words, if the uplink short message is a service-on-demand message, then the uplink MMS message includes the on-demand identifier LinkID.

In the step, if the uplink short message is a general uplink service message, then an uplink MMS message obtained by converting the uplink short message directly is sent to the SP server and does not need to add any identifier information.

S009: The SP server returns a corresponding downlink MMS message to the MMS gateway 02 according to the received uplink MMS message.

In the step, a specific processing method of the SP server is the same as that in the prior art. In other words, content demanded by a user taken as an information body of a downlink MMS message, a source number of an uplink MMS message taken as a destination number of the downlink MMS message and a destination number of the uplink MMS message taken as a source number of the downlink MMS message constructs a corresponding downlink MMS message together with the on-demand identifier LinkID obtained by parsing.

In the step, if the downlink MMS message is a general uplink service message, then a downlink MMS message does not include any identifier information.

S010: The MMS gateway 02 parses the received downlink MMS message, and obtains the source number and the on-demand identifier LinkID of the downlink MMS message.

S011: The MMS gateway 02 determines whether the source number obtained by parsing is within local short message value-added service SP information, if the source number obtained by parsing is within the local short message value-added service SP information, step S013 is executed; otherwise, step S012 is executed.

S012: The MMS gateway 02 sends the downlink MMS message to an MMS center, and the flow terminates.

S013: The MMS gateway 02 performs authentication on the downlink MMS message according to the on-demand identifier LinkID obtained by parsing.

S014: The MMS gateway 02 removes an on-demand identifier LinkID of a successfully authenticated downlink MMS message.

S015: The MMS gateway 02 converts the downlink MMS message into a downlink short message, and sends the downlink short message to the SMS gateway 01.

S016: The SMS gateway 01 sends the downlink short message to the user.

The SMS gateway 01 sends the received downlink short message to the user via an SMS center. After the SMS gateway 01 receives a downlink short message, a method for performing the downlink short message on subsequent processing by the SMS gateway 01 is the same as that in the prior art, therefore the disclosure does not describe the method here.

It needs to be noted that, in countries and regions that only use an SMS center and an MMS center instead of an SMS gateway and an MMS gateway to process an SMS message and an MMS message respectively, steps and functions performed by an SMS gateway/MMS gateway in the disclosure are implemented by an SMS center/MMS center in these countries and regions correspondingly.

The above description illustrates and describes a preferable embodiment of the disclosure. However, as previously mentioned, it should be understood that the disclosure is not restricted to the form disclosed by the present document and should not be regarded as exclusion of other embodiments, but can be used to various other combinations, modifications and environments and can be modified within the scope of conception of the disclosure described in the present document by the above teaching or technology or knowledge in related fields.

## Claims

1. A system for processing a short message value-added service, comprising a Short Messaging Service, SMS gateway (01), a Multimedia Messaging Service, MMS gateway (02) and a Service Provider, SP server (03), wherein
the SMS gateway (01) is configured to:
provide an interface for communicating with the MMS gateway;
forward a value-added service uplink short message among received uplink short messages to the MMS gateway, and send a user a downlink short message from the MMS gateway;
the MMS gateway (02) is configured with local short message value-added service SP information, and is configured to:
provide an interface for communicating with the SMS gateway; convert the value-added service uplink short message forwarded by the SMS gateway into an uplink MMS message and send the uplink MMS message to the SP server;
receive a downlink MMS message from the SP server and parse the received downlink MMS message to obtain a source number of the downlink MMS message, determine whether the source number is in the local short message value-added service SP information, convert the downlink MMS message into the downlink short message when the source number of the downlink MMS message is in the local short message value-added service SP information, and send the downlink short message to the SMS gateway; and
the SP server (03) is configured to receive the uplink MMS message from the MMS gateway, and return the downlink MMS message corresponding to the received uplink MMS message to the MMS gateway;
the SMS gateway (01) is further configured to: parse a received uplink short message to obtain a destination number of the uplink short message and determine whether the destination number is an SP parameter;
determine that the uplink short message is a value-added service uplink short message when the destination number is an SP parameter and send the value-added service uplink short message to the MMS gateway, send the uplink short message to an SMS center when the destination number is not an SP parameter.

2. The system according to claim 1, wherein
the MMS gateway (02) is further configured to:
perform authentication on the received value-added service uplink short message, and when the value-added service uplink short message is a service-on-demand message, add an on-demand identifier obtained by the authentication to the uplink MMS message obtained by converting the value-added service uplink short message; or
perform authentication on the downlink MMS message with the source number that is in the local short message value-added service SP information, and remove an on-demand identifier in the downlink MMS message when the downlink MMS message is a service-on-demand message.

3. The system according to claim 1 or 2, wherein the SMS gateway communicates with the MMS gateway using a Simple Mail Transfer Protocol, SMTP.

4. A method for processing a short message value-added service, comprising:
pre-configuring local short message value-added service Service Provider, SP information in a Multimedia Messaging Service, MMS gateway;
forwarding, by a Short Messaging Service, SMS gateway, a value-added service uplink short message among received uplink short messages to the MMS gateway;
converting, by the MMS gateway, the value-added service uplink short message into an uplink MMS message, and sending, by the MMS gateway, the uplink MMS message to an SP server (S008);
receiving, by the SP server, the uplink MMS message, and returning a downlink MMS message corresponding to the received uplink MMS message to the MMS gateway (S009);
receiving, by the MMS gateway, the downlink MMS message from the SP server and parsing the received downlink MMS message to obtain a source number of the downlink MMS message (S010), and determining, by the MMS gateway, whether the source number is in the local short message value-added service SP information (S011);
when the source number of the downlink MMS message is in the local short message value-added service SP information, converting, by the MMS gateway, the downlink MMS message into a downlink short message, and sending, by the MMS gateway, the downlink short message to the SMS gateway (S015); and
sending, by the SMS gateway, the downlink short message to a user (S016);
wherein the step of forwarding, by an SMS gateway, a value-added service uplink short message among received uplink short messages to the MMS gateway comprises:
parsing a received uplink short message to obtain a destination number of the uplink short message (S002);
determining whether the destination number is an SP parameter (S003); when the destination number is an SP parameter, the uplink short message is determined to be a value-added service uplink short message, sending the value-added service uplink short message to the MMS gateway (S005); when the destination number is not an SP parameter, sending the uplink short message to an SMS center (S004).

5. The method according to claim 4, further comprising: before the step of converting, by the MMS gateway, the value-added service uplink short message into an uplink MMS message, performing, by the MMS gateway, authentication on the value-added service uplink short message (S006).

6. The method according to claim 4, further comprising: before the step of converting, by the MMS gateway, the downlink MMS message into a downlink short message, authenticating, by the MMS gateway, the downlink MMS message (S013).

7. The method according to claim 4 or 5, further comprising: when the value-added service uplink short message is a service-on-demand message, before the step of sending, by the MMS gateway, the uplink MMS message to the SP server, adding, by the MMS gateway, an on-demand identifier obtained by authentication to the uplink MMS message (S008).

8. The method according to claim 4 or 6, further comprising: when the downlink MMS message is a service-on-demand message, before the step of converting, by the MMS gateway, the downlink MMS message into a downlink short message, removing, by the MMS gateway, an on-demand identifier in the downlink MMS message (S014).

## Patentansprüche

1. System zum Verarbeiten eines Kurznachrichten-Mehrwertdienstes, das einen Kurznachrichtendienst, ein SMS-Gateway (01), einen Multimedia-Nachrichtendienst, ein MMS-Gateway (02) und einen Dienstanbieter, SP-Server (03) umfassend, wobei das SMS-Gateway (01) für Folgendes konfiguriert ist:
Bereitstellen einer Schnittstelle für die Kommunikation mit dem MMS-Gateway;
Weiterleiten einer Aufwärtsverbindungskurznachricht für einen Mehrwertdienst unter empfangenen Aufwärtsverbindungskurznachrichten an das MMS-Gateway und Senden einer Abwärtsverbindungskurznachricht von dem MMS-Gateway an einen Benutzer;
das MMS-Gateway (02) mit lokalen Kurznachrichten-Mehrwertdienst-SP-Informationen konfiguriert ist und für Folgendes konfiguriert ist:
Bereitstellen einer Schnittstelle für die Kommunikation mit dem SMS-Gateway; Umwandeln der Mehrwertdienst-Aufwärtsverbindungskurznachricht, die vom SMS-Gateway weitergeleitet wird, in eine Aufwärtsverbindungs-MMS-Nachricht und Senden der Aufwärtsverbindungs-MMS-Nachricht an den SP-Server;
Empfangen einer Abwärtsverbindungs-MMS-Nachricht vom SP-Server und Analysieren der empfangenen Abwärtsverbindungs-MMS-Nachricht, um eine Quellennummer der Abwärtsverbindungs-MMS-Nachricht zu erhalten. Bestimmen, ob die Quellennummer in den lokalen Kurznachrichten-Mehrwertdienst-SP-Informationen enthalten ist, Umwandeln der Abwärtsverbindungs-MMS-Nachricht in die Abwärtsverbindungskurznachricht, wenn die Quellennummer der Abwärtsverbindungs-MMS-Nachricht in den lokalen Kurznachrichten-Mehrwertdienst-SP-Informationen enthalten ist, und Senden der Abwärtsverbindungskurznachricht an das SMS-Gateway; und
der SP-Server (03) dafür konfiguriert ist, die Aufwärtsverbindungs-MMS-Nachricht vom MMS-Gateway zu empfangen, und die Abwärtsverbindungs-MMS-Nachricht, die der empfangenen Aufwärtsverbindungs-MMS-Nachricht entspricht, an das MMS-Gateway zurückzusenden;
wobei das SMS-Gateway (01) ferner für Folgendes konfiguriert ist: Analysieren einer empfangenen Aufwärtsverbindungskurznachricht, um eine Zielnummer der Aufwärtsverbindungskurznachricht zu erhalten und zu bestimmen, ob die Zielnummer ein SP-Parameter ist;
Bestimmen, dass die Aufwärtsverbindungskurznachricht eine Mehrwertdienst-Aufwärtsverbindungskurznachricht ist, wenn die Zielnummer ein SP-Parameter ist, und Senden der Mehrwertdienst-Aufwärtsverbindungskurznachricht an das MMS-Gateway, Senden der Aufwärtsverbindungskurznachricht an ein SMS-Center, wenn die Zielnummer kein SP-Parameter ist.

2. System nach Anspruch 1, wobei das MMS-Gateway (02) ferner für Folgendes konfiguriert ist:
Ausführen einer Authentifizierung für die empfangene Mehrwertdienst-Aufwärtsverbindungskurznachricht und wenn es sich bei der Mehrwertdienst- Aufwärtsverbindungskurznachricht für um eine Dienst-auf-Anfrage-Nachricht handelt,Hinzufügen eines Auf-Anfrage-Identifikators, der durch die Authentifizierung erhalten wurde, zu der Aufwärtsverbindungs-MMS-Nachricht, die durch Konvertieren der Mehrwertdienst-Aufwärtsverbindungs-Kurznachricht erhalten wurde; oder
Ausführen einer Authentifizierung für die Abwärtsverbindungs-MMS-Nachricht mit der Quellennummer, die in den lokalen Kurznachrichten-Mehrwertdienst-SP-Informationen enthalten ist, und Entfernen einer Auf-Anfrage-ID in der Abwärtsverbindungs-MMS-Nachricht, wenn es sich bei der Abwärtsverbindungs-MMS-Nachricht um eine Dienst-auf-Anfrage-Nachricht handelt.

3. System nach Anspruch 1 oder 2, wobei das SMS-Gateway mit dem MMS-Gateway unter Verwendung eines SMTP (Simple Mail Transfer Protocol) kommuniziert.

4. Verfahren zum Verarbeiten eines Kurznachrichten-Mehrwertdienstes, das Folgendes umfasst:
Vorkonfigurieren der SP-Informationen des lokalen Kurznachrichten-Mehrwertdienst-Dienstanbieters in einem Multimedia Messaging Service, MMS-Gateway;
Weiterleiten, durch ein Kurznachrichtendienst-SMS-Gateway, einer Mehrwertdienst-Aufwärtsverbindungskurznachricht unter empfangenen Aufwärtsverbindungskurznachrichten an das MMS-Gateway;
Umwandeln der Mehrwertdienst-Aufwärtsverbindungskurznachricht durch das MMS-Gateway in eine Aufwärtsverbindungs-MMS-Nachricht und Senden der Aufwärtsverbindungs-MMS-Nachricht durch das MMS-Gateway an einen SP-Server (S008);
Empfangen der Aufwärtsverbindungs-MMS-Nachricht durch den SP-Server und Zurücksenden einer Abwärtsverbindungs-MMS-Nachricht, die der empfangenen Aufwärtsverbindungs-MMS-Nachricht entspricht, an das MMS-Gateway (S009);
Empfangen der Abwärtsverbindungs-MMS-Nachricht vom SP-Server durch das MMS-Gateway und Analysieren der empfangenen Abwärtsverbindungs-MMS-Nachricht, um eine Quellennummer der Abwärtsverbindungs-MMS-Nachricht zu erhalten (S010), und Bestimmen durch das MMS-Gateway, ob sich die Quellennummer in den lokalen Kurznachrichten-Mehrwertdienst-SP-Informationen befindet (S011);
wenn sich die Quellennummer der Abwärtsverbindungs-MMS-Nachricht in den lokalen Kurznachrichten-Mehrwertdienst-SP-Informationen befindet, Konvertieren der Abwärtsverbindungs-MMS-Nachricht durch das MMS-Gateway in eine Abwärtsverbindungskurznachricht und Senden der Abwärtsverbindungskurznachricht durch das MMS-Gateway an das SMS-Gateway (S015); und
Senden der Abwärtsverbindungskurznachricht an einen Benutzer durch das SMS-Gateway (S016);
wobei der Schritt des Weiterleitens einer Mehrwertdienst-Aufwärtsverbindungskurznachricht unter empfangenen Aufwärtsverbindungskurznachrichten an das MMS-Gateway durch ein SMS-Gateway Folgendes umfasst:
Analysieren einer empfangenen Aufwärtsverbindungskurznachricht, um eine Zielnummer der Aufwärtsverbindungskurznachricht zu erhalten (S002);
Bestimmen, ob die Zielnummer ein SP-Parameter ist (S003); wenn die Zielnummer ein SP-Parameter ist, wird bestimmt, dass die Aufwärtsverbindungskurznachricht eine Mehrwertdienst-Aufwärtsverbindungskurznachricht ist, Senden der Mehrwertdienst-Aufwärtsverbindungskurznachricht an das MMS-Gateway (S005) ; wenn die Zielnummer kein SP-Parameter ist, Senden der Aufwärtsverbindungskurznachricht an eine SMS-Zentrale (S004).

5. Verfahren nach Anspruch 4, das ferner Folgendes umfasst: vor dem Schritt des Konvertierens der Mehrwertdienst-Aufwärtsverbindungskurznachricht durch das MMS-Gateway in eine Aufwärtsverbindungs-MMS-Nachricht, Durchführen durch das MMS-Gateway einer Authentifizierung der Mehrwertdienst-Aufwärtsverbindungskurznachricht (S006).

6. Verfahren nach Anspruch 4, das ferner Folgendes umfasst: vor dem Schritt des Konvertierens der Abwärtsverbindungs-MMS-Nachricht durch das MMS-Gateway in eine Abwärtsverbindungskurznachricht, Authentifizieren der Abwärtsverbindungs-MMS-Nachricht durch das MMS-Gateway (S013) .

7. Verfahren nach Anspruch 4 oder 5, das ferner Folgendes umfasst: wenn es sich bei der Mehrwertdienst-Aufwärtsverbindungskurznachricht um eine Dienst-auf-Anfrage-Nachricht handelt, vor dem Schritt des Sendens der Aufwärtsverbindungs-MMS-Nachricht durch das MMS-Gateway an den SP-Server, Hinzufügen einer Auf-Anfrage-Kennung durch das MMS-Gateway, die durch Authentifizierung erhaltenen wurde, zu der Aufwärtsverbindungs-MMS-Nachricht (S008).

8. Verfahren nach Anspruch 4 oder 6, das ferner Folgendes umfasst: wenn die Abwärtsverbindungs-MMS-Nachricht eine Dienst-auf-Anfrage-Nachricht ist, vor dem Schritt des Konvertierens der Abwärtsverbindungs-MMS-Nachricht durch das MMS-Gateway in eine Abwärtsverbindungskurznachricht, Entfernen eines Auf-Anfrage-Kennzeichens durch das MMS-Gateway in der Abwärtsverbindungs-MMS-Nachricht (S014).

## Revendications

1. Système de traitement d'un service à valeur ajoutée de messages courts, comprenant une passerelle de service de messages courts (SMS) (01), une passerelle de service de messages multimédias (MMS) (02) et un serveur de fournisseur de services (SP) (03),
la passerelle SMS (01) étant configurée pour :
fournir une interface pour communiquer avec la passerelle MMS ;
transférer à la passerelle MMS un message court en liaison montante de service à valeur ajoutée parmi des messages courts en liaison montante reçus, et
envoyer à un utilisateur un message court en liaison descendante depuis la passerelle MMS ;
la passerelle MMS (02) étant configurée avec une information locale SP de service à valeur ajoutée de messages courts, et étant configurée pour :
fournir une interface pour communiquer avec la passerelle SMS ;
convertir le message court en liaison montante de service à valeur ajoutée transféré par la passerelle SMS en un message MMS en liaison montante, et envoyer le message MMS en liaison montante au serveur SP ;
recevoir un message MMS en liaison descendante en provenance du serveur SP et analyser le message MMS en liaison descendante reçu afin d'obtenir un numéro source du message MMS en liaison descendante ;
déterminer si le numéro source est dans l'information locale SP de service à valeur ajoutée de messages courts ;
convertir le message MMS en liaison descendante en le message court en liaison descendante quand le numéro source du message MMS en liaison descendante est dans l'information locale SP de service à valeur ajouté de messages courts ; et
envoyer le message court en liaison descendante à la passerelle SMS ; et
le serveur SP (03) étant configuré pour :
recevoir le message MMS en liaison montante en provenance de la passerelle MMS ; et
renvoyer le message MMS en liaison descendante correspondant au message MMS en liaison montante reçu à la passerelle MMS ;
la passerelle SMS (01) étant en outre configurée pour :
analyser un message court en liaison montante reçu afin d'obtenir un numéro de destination du message court en liaison montante, et déterminer si le numéro de destination est un paramètre SP ;
déterminer que le message court en liaison montante est un message court en liaison montante de service à valeur ajoutée quand le numéro de destination est un paramètre SP, et envoyer le message court en liaison montante de service à valeur ajoutée à la passerelle MMS ; et
envoyer le message court en liaison montante à un centre de gestion de SMS quand le numéro de destination n'est pas un paramètre SP.

2. Système selon la revendication 1, dans lequel la passerelle MMS (02) est en outre configurée pour :
réaliser une authentification sur le message court en liaison montante de service à valeur ajoutée reçu, et quand le message court en liaison montante de service à valeur ajoutée est un message de service à la demande, ajouter un identifiant à la demande obtenu par l'authentification au message MMS en liaison montante obtenu en convertissant le message court en liaison montante de service à valeur ajoutée ; ou
réaliser une authentification sur le message MMS en liaison descendante avec le numéro source qui est dans l'information locale SP de service à valeur ajoutée de messages courts, et supprimer un identifiant à la demande dans le message MMS en liaison descendante quand le message MMS en liaison descendante est un message de service à la demande.

3. Système selon la revendication 1 ou 2, dans lequel la passerelle SMS communique avec la passerelle MMS au moyen d'un protocole de transfert de courrier simple (SMTP).

4. Procédé de traitement d'un service à valeur ajouté de messages courts, consistant à :
préconfigurer une information de fournisseur de services (SP) locale de service à valeur ajoutée de messages courts dans une passerelle de service de messages multimédias (MMS) ;
transférer, par une passerelle de service de messages courts (SMS), à la passerelle MMS, un message court en liaison montante de service à valeur ajoutée parmi des messages courts en liaison montante reçus ;
convertir, par la passerelle MMS, le message court en liaison montante de service à valeur ajoutée en un message MMS en liaison montante, et envoyer, par la passerelle MMS, le message MMS en liaison montante à un serveur SP (SOO8) ;
recevoir, par le serveur SP, le message MMS en liaison montante, et renvoyer un message MMS en liaison descendante correspondant au message MMS en liaison montante reçu à la passerelle MMS (S009) ;
recevoir, par la passerelle MMS, le message MMS en liaison descendante en provenance du serveur SP et analyser le message MMS en liaison descendante reçu afin d'obtenir un numéro source du message MMS en liaison descendante (S010) ; et
déterminer, par la passerelle MMS, si le numéro source est dans l'information locale SP de service à valeur ajoutée de messages courts (S011) ;
quand le numéro source du message MMS en liaison descendante est dans l'information locale SP de service à valeur ajoutée de messages courts, convertir, par la passerelle MMS, le message MMS en liaison descendante en un message court en liaison descendante, et envoyer, par la passerelle MMS, le message court en liaison descendante à la passerelle SMS (S015) ; et
envoyer, par la passerelle SMS, le message court en liaison descendante à un utilisateur (S016) ;
l'étape de transfert, par une passerelle SMS, à la passerelle MMS, d'un message court en liaison montante de service à valeur ajoutée parmi des messages courts en liaison montante reçus, consistant à :
analyser un message court en liaison montante reçu afin d'obtenir un numéro de destination du message court en liaison montante (S002) ;
déterminer si le numéro de destination est un paramètre SP (S003) ;
quand le numéro de destination est un paramètre SP et qu'il est déterminé que le message court en liaison montante est un message court en liaison montante de service à valeur ajoutée, envoyer le message court en liaison montante de service à valeur ajoutée à la paramètre MMS (S005) ;
quand le numéro de destination n'est pas un paramètre SP, envoyer le message court en liaison montante à un centre de gestion de SMS (S004).

5. Procédé selon la revendication 4, consistant en outre à : avant l'étape de conversion, par la passerelle MMS, du message court en liaison montante de service à valeur ajoutée en un message MMS en liaison montante, réaliser, par la passerelle MMS, une authentification sur le message court en liaison montante de service à valeur ajoutée (S006).

6. Procédé selon la revendication 4, consistant en outre à : avant l'étape de conversion, par la passerelle MMS, du message MMS en liaison descendante en un message court en liaison descendante, authentifier, par la passerelle MMS, le message MMS en liaison descendante (S013).

7. Procédé selon la revendication 4 ou 5, consistant en outre à : quand le message court en liaison montante de service à valeur ajoutée est un message de service à la demande, avant l'étape d'envoi, par la passerelle MMS, du message MMS en liaison montante au serveur SP, ajouter, par la passerelle MMS, un identifiant à la demande obtenu par authentification au message MMS en liaison montante (S008).

8. Procédé selon la revendication 4 ou 6, consistant en outre à : quand le message MMS en liaison descendante est un message de service à la demande, avant l'étape de conversion, par la passerelle MMS, du message MMS en liaison descendante en un message court en liaison descendante, supprimer, par la passerelle MMS, un identifiant à la demande dans le message MMS en liaison descendante (S014).
